# EUROPEAN PATENT SPECIFICATION

(11) **EP 1 943 435 B1**
(45) Date of publication and mention of the grant of the patent: **17.11.2010**
(21) Application number: 06809085.1
(22) Date of filing: 22.09.2006
(51) Int. Cl.: F16F 1/38, F16C 27/06

(54) **ELASTIC BUSHING**
ELASTISCHE BUCHSE
GARNITURE ÉLASTIQUE

(30) Priority: 13.10.2005 IT CR20050014
(43) Date of publication of application: 16.07.2008
(73) Proprietor: S.A.V. S.R.L., 24040 Zingonia (BG) (IT)
(72) Inventor: SPINELLA, Giuseppe, 24040 Zingonia (BG) (IT)
(74) Representative: Marcio', Paola
(86) International application number: PCT/IB2006/002948
(87) International publication number: WO 2007/042934

(56) References cited:
- WO-A2-00/77416
- GB-A- 382 983
- US-A- 3 817 550
- US-A1- 2004 108 639

## Description

The invention relates to an elastic bushing, particularly for use in the field of autovehicles.

More in detail, the invention pertains to an elastic bushing for the connection of a rotating and/or vibrating axis or pin to a frame or support. A common example is the connection of the eye of a leaf spring to the frame of a commercial vehicle, van, truck, etc...

A known and widespread embodiment provides two coaxial metal sleeves (also called "tubes") which are joined by an elastic rubber ring. The assembly is generally forced: the outer sleeve or tube is forced into a suitable mounting seat, and the pin (or axis) is in turn forced into the inner sleeve of the bushing.

This kind of bushing may suffer a fatigue failure of the elastic ring, due to variable and/or alternate stress of compression and torsion, induced by relative rotation between the pin and the frame.

Some embodiments have been proposed to solve this problem, including a bushing with no outer rigid sleeve, made essentially by an inner self-lubricating sleeve and a rubber ring free to rotate and fitted with an internal reinforcing sleeve (see EP 1368572 B1 of the same applicant).

However, when the bushing has to bear severe loads (e.g. in medium or large-sized commercial vehicles), a bigger and more robust solution is generally adopted, e.g. the above-mentioned all-metal construction with the elastic ring firmly fixed to both the inner and outer sleeve.

The problem of fatigue failure in this case is faced with a drawing of the outer sleeve, in order to prestress the elastic ring. It has been found that fatigue life is noticeably extended by said prestress of the elastic ring, substantially because it avoids the "stretching" of the elastic fibres and induces an axial orientation of the same fibres.

The drawing of the bushing, to be obtained through a conical drawbench, is however an expensive process.

Another disadvantage is the assembly by interference (forcing) between the metal surfaces of the bushing and the seat; it is known that such assembly requires strict tolerances, which can only be met through expensive tooling.

Further to this, the metal parts are also responsible for increased weight and cost of the bushing.

US-A-2004/108639 discloses an elastic bushing comprising an outer sleeve made of a plastic material having an outer surface with a tubular, tapered, straight or non-straight form, not adapted to be inserted into a seat having a cylindrical shape.

The invention is aimed to eliminate these disadvantages. A first aim, in particular, is to realize a bushing for medium/high loads, obtaining the prestress of the elastic ring without the aforesaid expensive drawing; another aim is to reduce the required machining precision both for the bushing and the seat; a further aim is to reduce the overall weight and cost of the bushing.

The aims are reached with an elastic bushing as claimed in claim 1.

According to a preferred aspect, the side surface of the outer plastic sleeve has a convex portion, with a substantially "barrel-like" profile. The overall diameter of the bushing is then increased by the curvature of said convex portion, allowing to force the bushing into the respective seat.

The mounting seat is commonly made of metal, so that the assembly results in the surface of the plastic sleeve deformed and substantially flattened; following this deformation, the inner surface of the plastic sleeve is curved towards the axis of the bushing, thus compressing the elastic ring.

In a first embodiment, the elastic ring is integral (e.g. vulcanized) with the inner sleeve and substantially fixed also to the outer sleeve; the bushing is able to bear radial stress as well as torsional stress.

In a second embodiment, the inner sleeve is free to rotate relative to the elastic ring, and the bushing comprises a seff-lubricant layer between the two aforesaid elements. By this degree of freedom, the sleeve (connected to the pin) is torsionally disconnected from the elastic ring, which is subjected to substantially radial stress only.

More in detail, this second embodiment provides two self-lubricating collars, preferably made of Movelon® (a registered trademark of the same applicant), said collars being inserted between the inner sleeve and the elastic ring.

According to a further aspect of the invention, said self-lubricating collars have a head with a conical portion, suitable to give an axial support for the elastic ring; through this support, a greater axial load can be supported by the bushing.

The elastic ring is normally made of rubber; the outer plastic sleeve may be realized, for example, with nylon.

It can be understood that the invention makes use of the deformation of the outer plastic sleeve, when assembly takes place, to obtain a prestress of the elastic ring without the expensive drawing which is indispensable in prior-art metal bushings.

It is also to note that the bushing is mounted by forcing a plastic surface on a metal one, namely the side surface of the outer sleeve and the inner surface of the mounting seat (for example, the eye of a leaf spring). This kind of assembly does not require the same surface and dimension tolerances of a forcing of two metal parts, thus reducing the machining cost.

The applicant has also found that a plastic outer sleeve, and particularly made of nylon, with a suitable mounting interference, gives a well sufficient slip resistance, and can fully replace a metal sleeve.

The plastic outer sleeve allows to reduce the cost and weight of the bushing; advantage from this reduced weight is not negligible, mainly in a commercial vehicle provided with many bushings of this kind.

The invention is now described in greater detail, with the help of the enclosed drawings of some non limitative examples, wherein:
Fig. 1 is a cutaway view of a bushing according to the invention;
Fig. 2 shows the mounting position of the bushing of Fig. 1;
Fig. 3 is a cutaway view of a bushing according to the invention, in an embodiment alternative to that of Fig. 1;
Fig. 4 shows the mounting position of the bushing of Fig. 3.

Referring now to the figures, an elastic bushing is shown comprising a metal inner sleeve 1, an elastic ring 2 having a substantially tubular form, and an outer sleeve 3 made of a plastic material and coaxial to the inner sleeve 1.

The elastic ring 2 is provided between the coaxial sleeves 1 and 3, and is made of rubber or other material having equivalent elastic features; the plastic sleeve 3 is preferably made of nylon.

There are a couple of drawn shaped washers 4, made according to known art, at the end portions of the inner sleeve 1.

The outer sleeve 3, according to the invention, is able to buckle during the assembly of the bushing into a suitable seat, to allow to force the bushing in the seat and to prestress the elastic ring 2.

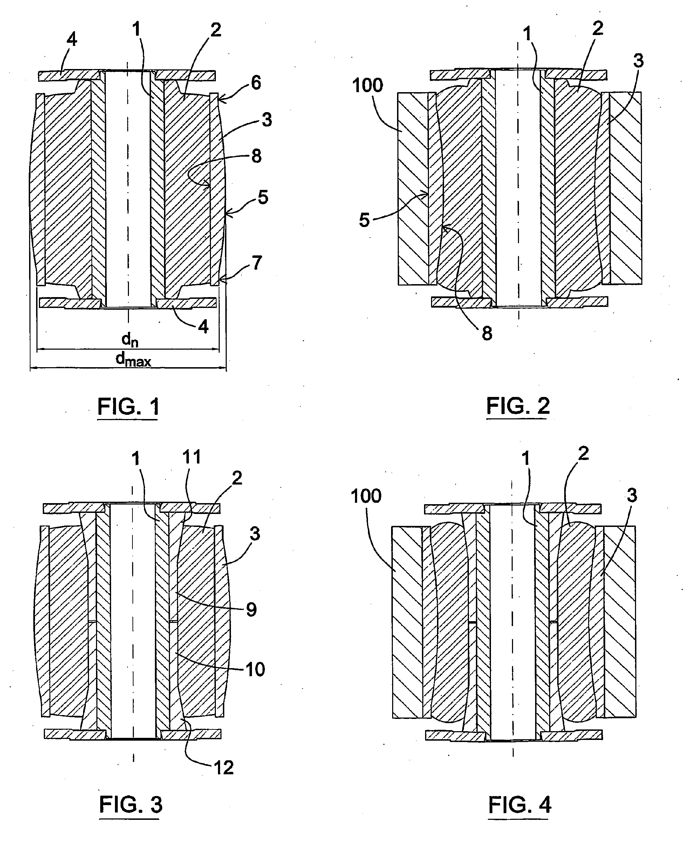

Referring in particular to Fig. 1, the outer sleeve 3 has a convex side surface, with a "barrel-like" profile; more in detail, the side surface has a convex portion 5 between two substantially cylindrical portions 6 and 7. Preferably, the convex portion 5 is extended to the major part of the axial dimension of the bushing (Fig. 1).

Internal side surface 8 of the outer sleeve 3, contacting the elastic ring 2, is preferably cylindrical and plane.

The outer sleeve 3 has a nominal diameter dₙ, taken at cylindrical portions 6 and 7 (Fig. 1), that generally corresponds to the nominal diameter of the mounting seat; the convex portion 5, as an effect of the curvature, has a greater diameter up to a maximum of dₘₐₓ.

The increased diameter allows to force the bushing into the mounting seat. The difference between maximum diameter dₘₐₓ and nominal value dₙ is determined so that the assembly is easy but, at the same time, resistant to slip. In a common case, the two values differ by a few millimetres; as an example, a bushing for the wheel suspension of a commercial vehicle having dₙ = 65 mm, and sleeve 3 made of nylon, can be realized with maximum diameter dₘₐₓ = 70 mm.

Fig. 2 shows the bushing 1 mounted in a metal eye 100 of a leaf spring. The figure shows the plastic sleeve 3 in the deformed state after the assembly: the outer side surface of the sleeve 3 is flattened against the inner surface of the eye 100, while the inner side surface 8 is deformed and bent towards the axis of the bushing. In practical terms, the curvature of the convex portion 5 is passed, through the deformation, to the inner side surface 8.

Due to buckling of the side surface 8, elastic ring 2 is subjected to a permanent prestress of compression, thus improving its performance especially in terms of fatigue life and response to torsional stress.

In embodiments of Figs. 1 and 2, the elastic ring 2 is vulcanized to the inner sleeve 1, and the outer sleeve 3 is substantially integral with the elastic ring 2. The bushing is then able to bear a torsional stress, through the deformation of the elastic ring 2.

Figs. 3 and 4 refer to another embodiment, wherein there is a self-lubricating layer between elastic ring 2 and inner sleeve 1, and said inner sleeve 1 is free to rotate relative to the elastic ring.

Said self-lubricating layer is preferably realized by providing two collars 9 and 10 made of Movelon®, between the inner sleeve 1 and the elastic ring 2.

The bushing of Figs. 3 and 4 can substantially absorb only radial stress but not torsional stress. As a consequence, the stress of the elastic ring 2 is noticeably less severe compared to embodiment of Figs. 1, 2; the compression of the elastic material, even with radial load only, is however still advantageous in terms of an increased life of the bushing.

Collars 9, 10 may be equally replaced by a single, cylindrical piece, providing a self-lubricating seat for the inner sleeve 1.

Another useful feature of collars 9 and 10 is represented by head portions 11, 12 (Fig. 3) having a conical shape, forming an axial support for the elastic ring 2. This solution gives the bushing a better reaction to axial stress.

The assembly is made by forcing the bushing into the seat, e.g. the eye 100 of Figs. 2 and 4. Due to interference between the bushing and the seat, the bushing is held into the seat and elastic ring 2 is prestressed by the above mentioned buckling of the outer sleeve 3.

The bushing achieves the above aims and purposes, and is particularly suitable for leaf springs, vehicle suspensions and noticeably for use in commercial vehicles and vans.

## Claims

1. Elastic bushing comprising at least an inner metal sleeve (1), an outer sleeve (3) coaxial to said inner sleeve (1) and an elastic ring (2) substantially having a tubular form and provided between said inner sleeve (1) and said outer sleeve (3), where the outer sleeve (3) is made of a plastic material and is adapted to buckle during the assembly of said bushing into a suitable seat (100), for allowing to force the bushing into said seat (100), and to establish a prestress of compression of said elastic ring (2) **characterized in that** the outer sleeve (3) has an outer side surface having at least a curved, convex portion (5).

2. Bushing according to claim 1, **characterized in that** said convex portion (5) of the side surface of the outer sleeve (3) is comprised between two substantially cylindrical plane portions (6, 7).

3. Bushing according to any one of preceding claims, **characterized in that** the inner sleeve (1) is free to rotate relative to the elastic ring (2), and said bushing comprises a self-lubricating layer between said elastic ring (2) and said inner sleeve (1).

4. Bushing according to claim 3, **characterized by** two collars (9, 10) made of self-lubricating material and placed between said elastic ring (2) and said inner sleeve (1).

5. Bushing according to claim 4, **characterized by** said two collars (9, 10) having head portions (11, 12) with a conical shape, to form an axial support for said elastic ring (2).

6. Bushing according to any one of preceding claims, **characterized in that** the outer sleeve (3) is made of any plastic material, and particularly of nylon.

7. Bushing according to any one of preceding claims, **characterized in that** the elastic ring (2) is made of rubber.

8. A leaf spring, particularly for a commercial vehicle, **characterized in that** it comprises at least one bushing according to any one of preceding claims.

9. A vehicle, particularly a commercial vehicle, **characterized by** comprising at least one bushing according to any one of preceding claims.

## Patentansprüche

1. Elastische Buchse bestehend aus mindestens einer inneren Metallhülse (1), einer zu genannter Innenhülse (1) koaxialen Außenhülse (3) und einem elastischen Ring (2), der im wesentlichen rohrförmig ist und sich zwischen genannter Innenhülse (1) und genannter Außenhülse (3) befindet, worin die Außenhülse (3) aus einem Kunststoffmaterial besteht und in der Lage ist, während der Montage der genannten Buchse in ein geeignetes Lager (100) nachzugeben, damit ermöglicht wird, die Buchse in genanntes Lager (100) einzupressen und eine Druckvorspannung des genannten elastischen Rings (2) zu bilden, **dadurch gekennzeichnet, dass** die Außenhülse (3) eine Außenseitenfläche mit mindestens einem kurvenförmigen konvexen Teil (5) aufweist.

2. Buchse nach Anspruch 1, **dadurch gekennzeichnet, dass** sich genannter konvexer Teil (5) der Seitenfläche der Außenhülse (3) zwischen zwei im wesentlichen zylindrischen ebenen Teilen (6, 7) befindet.

3. Buchse nach einem der vorstehenden Ansprüche, **dadurch gekennzeichnet, dass** die Innenhülse (1) bezüglich des elastischen Rings (2) frei drehen kann und dass genannte Buchse eine selbstschmierende Schicht zwischen dem genannten elastischen Ring (2) und genannter Innenhülse (1) umfasst.

4. Buchse nach Anspruch 3, **gekennzeichnet durch** zwei Bunde (9, 10) aus selbstschmierendem Material, die zwischen genanntem elastischen Ring (2) und genannter Innenhülse (1) angeordnet sind.

5. Buchse nach Anspruch 4, **gekennzeichnet durch** die genannten zwei Bunde (9, 10), die Kopfteile (11, 12) konischer Form aufweisen, um ein axiales Auflager für genannten elastischen Ring (2) zu bilden.

6. Buchse nach einem der vorstehenden Ansprüche, **dadurch gekennzeichnet, dass** die Außenhülse (3) aus einem beliebigen Kunststoffmaterial und insbesondere aus Nylon hergestellt ist.

7. Buchse nach einem der vorstehenden Ansprüche, **dadurch gekennzeichnet, dass** der elastische Ring (2) aus Gummi ist.

8. Bandfeder, insbesondere für ein Nutzfahrzeug, **dadurch gekennzeichnet, dass** sie mindestens eine Buchse nach einem der vorstehenden Ansprüche umfasst.

9. Fahrzeug, insbesondere ein Nutzfahrzeug, **dadurch gekennzeichnet, dass** es mindestens eine Buchse nach einem der vorstehenden Ansprüche umfasst.

## Revendications

1. Garniture élastique comprenant au moins un manchon métallique interne (1), un manchon externe (3) coaxial avec ledit manchon interne (1) et une bague élastique (2) ayant substantiellement une forme tubulaire et prévue entre ledit manchon interne (1) et ledit manchon externe (3), où le manchon externe (3) est réalisé en matériau plastique et prévu pour se déformer pendant l'assemblage de ladite garniture dans un logement approprié (100), afin de permettre de forcer la garniture dans ledit logement (100) et d'établir une précontrainte de compression de ladite bague élastique (2), **caractérisée par le fait que** le manchon externe (3) possède une surface latérale externe ayant au moins une portion convexe courbe (5).

2. Garniture selon la revendication 1, **caractérisée par le fait que** ladite portion convexe (5) de la surface latérale du manchon externe (3) est comprise entre deux portions planes substantiellement cylindriques (6, 7).

3. Garniture selon l'une des revendications précédentes, **caractérisée par le fait que** ledit manchon interne (1) est libre de pivoter par rapport à la bague élastique (2) et que ladite garniture comprend une couche de lubrification automatique entre ladite bague élastique (2) et ledit manchon interne (1).

4. Garniture selon la revendication 3, **caractérisée par** deux colliers (9, 10) réalisés en matériau à lubrification automatique et placés entre ladite bague élastique (2) et ledit manchon interne (1).

5. Garniture selon la revendication 4, **caractérisée par le fait que** lesdits deux colliers (9, 10) ont des portions de tête (11, 12) avec une forme conique, pour former un support axial pour ladite bague élastique (2).

6. Garniture selon l'une des revendications précédentes, **caractérisée par le fait que** le manchon externe (3) est réalisé en matériau plastique quelconque, plus particulièrement en nylon.

7. Garniture selon l'une des revendications précédentes, **caractérisée par le fait que** la bague élastique (2) est réalisée en caoutchouc.

8. Un ressort à lames, plus particulièrement pour un véhicule commercial, **caractérisé par le fait qu'**il comprend au moins une garniture selon l'une des revendications précédentes.

9. Un véhicule, plus particulièrement un véhicule commercial, **caractérisé par le fait qu'**il comprend au moins une garniture selon l'une des revendications précédentes.
